# EUROPEAN PATENT SPECIFICATION

(11) **EP 1 955 982 B1**
(45) Date of publication and mention of the grant of the patent: **25.07.2012**
(21) Application number: 07075756.2
(22) Date of filing: 04.09.2007
(51) Int. Cl.: C03B 37/018

(54) **Method for manufacturing an optical preform.**
Verfahren zur Herstellung einer optischen Vorform
Procédé de fabrication d'une préforme optique

(30) Priority: 08.09.2006 NL 1032463
(43) Date of publication of application: 13.08.2008
(73) Proprietor: Draka Comteq B.V., 1083 HJ Amsterdam (NL)
(72) Inventor: Deckers, Rob Hubertus Matheus, 5643 KB Eindhoven (NL); Van Stralen, Mattheus Jacobus Nicolaas, 5045 XN Tilburg (NL); Hartsuiker, Johannes Antoon, 5624 KL Eindhoven (NL)
(74) Representative: Blokland, Arie

(56) References cited:
- DE-A1- 3 830 622
- US-A- 4 349 582
- US-A1- 2003 115 909

## Description

The present invention relates to a method for manufacturing an optical preform by carrying out one or more chemical vapour deposition reactions in a substrate tube, which method comprises the following steps:
i) supplying one or more doped or undoped glass-forming precursors to the substrate tube, and
ii) effecting a reaction between the reactants supplied in step i) in the substrate tube so as to form one or more glass layers on the interior of the substrate tube, which step ii) comprises the creation only of a pulsed plasma zone in the interior of the substrate tube.

Such a method is known per se from International application WO 03/057635, which mentions as a shortcoming of the aforementioned PCVD process the low deposition rate of the glass. One way to increase the deposition rate is to increase the mass flow rate of the glass-forming precursors in the interior of the substrate tube. This causes the pressure in the tube to increase, however, which may lead to the deposition of so-called soot particles instead of glass. Increasing the mass flow rate of the glass-forming precursors may also lead to the reactant gases passing through the plasma zone before the glass-forming precursors are actually converted into a glass layer, resulting in a considerable loss of material and possibly in a nonuniform radial profile along the axial axis of the substrate tube.

From the aforesaid International application it is also known to create so-called eddy diffusion in the interior of the substrate tube by supplying the plasma power to the substrate tube in pulses. Although said pulsing is described as an activation on a periodic or non-periodic basis, no additional data whatsoever are provided with regard to said pulsing.

A method for manufacturing an optical preform by using a pulsed plasma zone in the interior of the substrate tube for depositing glass layers on the interior of a substrate tube is known from DE 38 30 622. The apparatus consists of a plasma-electrode which extends over the whole length of the substrate tube. Both the plasma-electrode and the substrate tube are surrounded by a furnace for obtaining high temperatures. According to this publication the deposition length on the interior of the substrate tube is its whole length, i.e. about 80 cm, at a plasma power of 5-10 kW, a pulse pause of 10 ms, and a pulse time of 1.5 ms.

It is an object of the present invention to provide a method for improving the efficiency of the deposition process.

Another object of the present invention is to provide a method for manufacturing an optical preform by means of the PCVD process wherein high deposition rates are achieved.

Yet another object of the present invention is to provide a method for manufacturing an optical preform by means of the PCVD process wherein high deposition rates in combination with a decrease average microwave power are achieved.

The present invention as referred to in the introduction is characterised in that the plasma zone formed in the interior of the substrate tube is realised in pulses, using a frequency > 100 Hz, with the maximum plasma power being active during a period of 0.001 - 5 milliseconds, wherein during step ii) a resonator, in which the plasma is generated, travels forth and back along the length of the substrate tube.

One or more of the aforesaid objects are accomplished by using such a pulsed plasma zone. The present inventors have in particular found that when high deposition rates are aimed at, with the microwave power of the PCVD process being increased, a considerable part of the microwave energy is eventually converted into heat, which may lead to overheating of equipment components used in the PCVD process, so that additional cooling is required. Another drawback of such a temperature increase is the decreased incorporation efficiency of dopants in the deposited glass layers, in particular as far as germanium dioxide is concerned. The present invention thus makes it possible to realise high deposition rates in the PCVD process whilst using a lower average microwave power in comparison to a continuous PCVD process. As a result of this, the temperature in the interior of the substrate tube will decrease, so that the incorporation efficiency of dopants in the glass layers will not be adversely affected. The plasma power in step ii) is set to a value between maximum power and a value lower than the maximum power. This means that the plasma power is controlled in a pulsed manner between maximum power and a value lower than the maximum power during the deposition process.

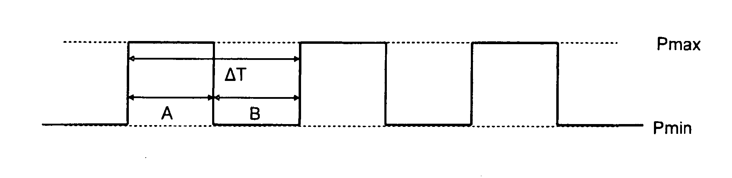

In the present method, the period during which the plasma power is set to maximum power, also called period A (see the appended figure), preferably ranges between 0.001 - 5 milliseconds. It has been found that if a period A of less than 0.001 milliseconds is used, the plasma in the substrate tube will be unstable and ineffective, which renders the deposition of glass layers virtually impossible. On the other hand, if a duration of the period A of more than 5 milliseconds is used, too much heat will be produced in the substrate tube, which will have a negative effect on the incorporation efficiency of dopants, and which will moreover lead to a considerably increased temperature load on equipment components. According to the present invention the length of the plasma in the interior of the substrate tube is about 15-30 cm, whereas the substrate tube itself has a length of about 100-120 cm. During the deposition step ii) the resonator, in which the plasma is generated, travels forth and back along the length of the substrate tube between two points, one located at the supply side and one located at the discharge side of the substrate tube.

To obtain a stable PCVD process, the plasma power is preferably set to a value below maximum power for a period of maximally 5 milliseconds, more preferably 1 millisecond, also referred to as period B (see the appended figure). As regards the duration of period B, an upper limit of 0.1 milliseconds applies in a special embodiment, above which value the risk of soot formation increases, as the present inventors have found. The plasma power during period B is preferably less than 50% of the plasma power during period A, in particular less than 25%, more in particular less than 10% of the plasma power during period A. In a special embodiment of the present invention it is possible to set the plasma power to zero during period B.

On the basis of this way of operating the PCVD process, using a pulsed plasma power, the present inventors have found that by pulsing the plasma the same deposition rate can be achieved as with a PCVD process based on a constant plasma power, whereas the heat production is significantly lower when the method according to the present invention is used, which has an advantageous effect on the incorporation efficiency of dopants. Moreover, the present method makes it possible to increase the deposition rate without the equipment used therewith becoming overheated.

Using the present invention, preforms for optical fibres are produced by means of an internal chemical vapour deposition technique (CVD), which process involves the deposition of doped or undoped reactive, glass-forming gases on the inside of a hollow substrate tube. Such reactive gases are supplied on one side of the substrate tube, viz. the entrance side, forming a glass layer on the interior of the substrate tube under the influence of special process conditions. An energy source is reciprocated between two reversal points along the substrate tube so as to form a glass layer. The energy source, in particular a plasma generator, supplies high-frequency energy, as a result of which a plasma is generated in the interior of the substrate tube, under which plasma conditions the reactive, glass-forming gases will react (the plasma CVD technique).

It is preferable to set the plasma power to the maximum plasma power during period A when pulsed plasma power is used, in which regard the term "maximum power" is to be understood to mean the power that would be set for a specific deposition rate if no pulsed plasma were used, i.e. maintaining an intensity of the plasma substantially constant during the depositing of glass layers on the interior of the substrate tube. Consequently, the term "maximum plasma power" as used herein does not refer to the power that can be maximally generated by the PCVD equipment. During period B the power is set to a value such that the power is maximally 50%, preferably 25%, in particular 10% of the plasma power during period A.

In a special embodiment of the present method, the frequency is preferably at least 1500 Hz.

The peak power used in the pulsed plasma zone is set to a value such that the deposition rate of the glass layers is at least 2.0 g/min, in particular 3.2 g/min.

To provide a better understanding of the present invention, the pulsed plasma power is schematically shown hereinafter.

In the appended figure the plasma power supplied to the substrate tube is schematically represented as a function of time, with parameter A indicating the time (seconds) during which the plasma is set to the plasma power Pₘₐₓ. Then the plasma power is reduced for a specific period, indicated by parameter B. The plasma power is thus alternated between values Pₘₐₓ and Pₘᵢₙ, wherein the frequency can be understood to be the number of pulses per second, viz. 1/ (A + B), wherein (A + B) equals ΔT. In practice the co-called "duty cycle" is also used, which may be interpreted as A/ΔT or A*f, wherein f is the pulse frequency.

According to the present invention, the pulse frequency is thus preferably at least 100 Hz, wherein the period of time during which the pulse is "on", viz. parameter A, ranges between 0.001 - 5 milliseconds, as a result of which the incorporation efficiency of dopants, for example germanium dioxide, is improved whilst the same deposition rate is maintained in comparison with a PCVD process in which the microwave power is set to constant maximum power.

## Claims

1. A method for manufacturing an optical preform by carrying out one or more chemical vapour deposition reactions in a substrate tube, which method comprises the following steps:
i) supplying one or more doped or undoped glass-forming precursors to the substrate tube, and
ii) effecting a reaction between the reactants supplied in step i) in the substrate tube so as to form one or more glass layers on the interior of the substrate tube, which step ii) comprises the creation only of a pulsed plasma zone in the interior of the substrate tube,
**characterised in that** the plasma zone formed in the interior of the substrate tube is realised in pulses, using a frequency > 100 Hz, with the maximum plasma power being active during a period A of 0.001 - 5 milliseconds, wherein during step ii) a resonator, in which the plasma is generated, travels forth and back along the length of the substrate tube.

2. A method according to claim 1, **characterised in that** the active plasma power is set to a value which corresponds to a deposition rate of glass layers in the interior of the substrate tube that is obtained when the plasma power is not pulsed.

3. A method according to either one or both of the preceding claims 1-2, **characterised in that** the frequency is at least 1500 Hz.

4. A method according to any one or more of the claims 1-3, **characterised in that** the peak power used in the pulsed plasma zone is set to a value such that the deposition rate of the glass layers is at least 2.0 g/min.

5. A method according to any one or more of the preceding claims, **characterized in that**, the plasma power is set to a value below maximum power for a period B of maximally 5 milliseconds.

6. A method according to any one or more of the preceding claims, **characterized in that**, the plasma power is set to a value below maximum power for a period B of maximally 1 millisecond.

7. A method according to any one or more of the claims 5-6, **characterized in that** the plasma power during period B is less than 50% of the plasma power during period A.

8. A method according to claim 7, **characterized in that** the plasma power during period B is less than 25% of the plasma power during period

9. A method according to claim 8, **characterized in that** the plasma power during period B is less than 10% of the plasma power during period A.

## Patentansprüche

1. Verfahren zur Herstellung einer optischen Vorform durch Ausführen einer oder mehrerer chemischer Gasphasenabscheidungs-Reaktionen in einer Substratröhre, das die folgenden Schritte umfasst:
(i) Zuführen von einem oder mehren dotierten oder undotierten glas bildenden Ausgangsstoffen zur Substratröhre, und
(ii) Bewirken einer Reaktion in der Substratröhre zwischen den aus Schritt i) bereitgestellten Reaktanten zur Bildung einer oder mehrerer Glasschichten in dem Inneren der Substratröhre, wobei der Schritt ii) nur die Erzeugung einer gepulsten Plasmazone in dem Inneren der Substratröhre umfasst,
**dadurch gekennzeichnet, dass** die in dem Inneren der Substratröhre gebildete Plasmazone aus Pulsen umgesetzt ist, die eine Frequenz > 100 Hz verwenden, wobei die maximale Plasmaleistung während eines Zeitraums A von 0,001 - 5 Millisekunden aktiv ist, wobei sich während des Schritts ii) ein Resonator, in dem das Plasma erzeugt wird, entlang der Länge der Substratröhre vor und zurück bewegt.

2. Verfahren nach Anspruch 1, **dadurch gekennzeichnet, dass** die aktive Plasmaleistung auf einen Wert eingestellt wird, der mit einer Abscheidungsrate von Glasschichten in dem Inneren der Substratröhre korrespondiert, die mit einer nicht gepulsten Plasmaleistung erreicht wird.

3. Verfahren nach entweder einem oder beiden der vorhergehenden Ansprüche 1 und 2, **dadurch gekennzeichnet, dass** die Frequenz wenigstens 1500 Hz beträgt.

4. Verfahren nach einem oder mehreren der Ansprüche 1 bis 3, **dadurch gekennzeichnet, dass** die in der gepulsten Plasmazone verwendete Höchstleistung auf einen Wert derart eingestellt wird, dass die Abscheidungsrate der Glasschichten wenigstens 2,0 g/min beträgt.

5. Verfahren nach einem oder mehreren der vorhergehenden Ansprüche, **dadurch gekennzeichnet, dass** die Plasmaleistung auf einen Wert unterhalb der Maximalleistung für einen Zeitraum B von maximal 5 Millisekunden eingestellt wird.

6. Verfahren nach einem oder mehreren der vorhergehenden Ansprüche, **dadurch gekennzeichnet, dass** die Plasmaleistung auf einen Wert unterhalb der Maximalleistung für einen Zeitraum B von maximal 1 Millisekunde eingestellt wird.

7. Verfahren nach einem oder mehreren der Ansprüche 5 bis 6, **dadurch gekennzeichnet, dass** die Plasmaleistung während des Zeitraums B weniger als 50% der Plasmaleistung während des Zeitraums A beträgt.

8. Verfahren nach Anspruch 7, **dadurch gekennzeichnet, dass** die Plasmaleistung während des Zeitraums B weniger als 25% der Plasmaleistung während des Zeitraums A beträgt.

9. Verfahren nach Anspruch 8, **dadurch gekennzeichnet, dass** die Plasmaleistung während des Zeitraums B weniger als 10% der Plasmaleistung während des Zeitraums A beträgt.

## Revendications

1. Procédé de fabrication d'une préforme optique en réalisant une ou plusieurs réactions de dépôt chimique en phase vapeur dans un tube de substrat, lequel procédé comprend les étapes suivantes consistant à :
i) amener un ou plusieurs précurseurs vitrifiants dopés ou non dopés dans le tube de substrat, et
ii) effectuer une réaction entre les réactifs amenés à l'étape i) dans le tube de substrat de façon à former une ou plusieurs couches de verre sur l'intérieur du tube de substrat, laquelle étape ii) comprend la création uniquement d'une zone de plasma pulsé à l'intérieur du tube de substrat,
**caractérisé en ce que** la zone de plasma formée à l'intérieur du tube de substrat est réalisée en impulsions, en utilisant une fréquence > 100 Hz, la puissance maximale de plasma étant active pendant une période A de 0,001 à 5 millisecondes, dans lequel pendant l'étape ii), un résonateur, dans lequel le plasma est généré, se déplace d'avant en arrière sur la longueur du tube de substrat.

2. Procédé selon la revendication 1, **caractérisé en ce que** la puissance de plasma actif est établie à une valeur qui correspond à un taux de dépôt de couches de verre à l'intérieur du tube de substrat qui est obtenue lorsque la puissance de plasma n'est pas pulsée.

3. Procédé selon l'une quelconque ou les deux revendications précédentes 1 à 2, **caractérisé en ce que** la fréquence est d'au moins 1 500 Hz.

4. Procédé selon l'une quelconque ou plusieurs des revendications 1 à 3, **caractérisé en ce que** la puissance de pointe utilisée dans la zone de plasma pulsé est établie à une valeur telle que le taux de dépôt des couches de verre est d'au moins 2,0 g/min.

5. Procédé selon l'une quelconque ou plusieurs des revendications précédentes, **caractérisé en ce que**, la puissance de plasma est établie à une valeur inférieure à la puissance maximale pendant une période B de 5 millisecondes au maximum.

6. Procédé selon l'une quelconque ou plusieurs des revendications précédentes, **caractérisé en ce que** la puissance de plasma est établie à une valeur inférieure à la puissance maximale pendant une période B de 1 milliseconde au maximum.

7. Procédé selon l'une quelconque ou plusieurs des revendications 5 à 6, **caractérisé en ce que** la puissance de plasma pendant la période B est inférieure à 50 % de la puissance de plasma pendant la période A.

8. Procédé selon la revendication 7, **caractérisé en ce que** la puissance de plasma pendant la période B est inférieure 25 % de la puissance de plasma pendant la période A.

9. Procédé selon la revendication 8, **caractérisé en ce que** la puissance de plasma pendant la période B est inférieure à 10 % de la puissance de plasma pendant la période A.
